# EUROPÄISCHE PATENTSCHRIFT

(11) **EP 0 859 173 B1**
(45) Veröffentlichungstag und Bekanntmachung des Hinweises auf die Patenterteilung: **20.03.2002**
(21) Anmeldenummer: 97119224.0
(22) Anmeldetag: 04.11.1997
(51) Int. Cl.: F16H 61/32, F16H 63/18

(54) **Schaltvorrichtung für ein mehrgängiges Wechselgetriebe eines Kraftfahrzeugs**
Shift arrangement for a multi-ratio change-speed gearbox of a motor vehicle
Dispositif de commande d'une boîte de vitesses multiples pour véhicule automobile

(30) Priorität: 17.02.1997 DE 19705979; 01.07.1997 DE 19727946
(43) Veröffentlichungstag der Anmeldung: 19.08.1998
(73) Patentinhaber: ROBERT BOSCH GMBH, 70442 Stuttgart (DE)
(72) Erfinder: Bleile, Michael, 72770 Reutlingen (DE); Frank, Andreas, 71287 Weissach (DE); Schwientek, Christian, 74189 Weinsberg (DE); Meier, Thomas, 74199 Untergruppenbach (DE)

(56) Entgegenhaltungen:
- EP-A- 0 532 924
- DE-A- 1 505 531
- DE-A- 19 627 980
- GB-A- 1 175 415
- US-A- 5 150 629

## Beschreibung

Die Erfindung betrifft eine Schaltvorrichtung für ein mehrgängiges Wechselgetriebe eines Kraftfahrzeugs nach Anspruch 1.

Eine Schaltvorrichtung, wie sie zum Beispiel aus der DE 196 27 980 A bekannt ist, weist eine mit einem Antrieb gekoppelte, drehbeweglich angeordnete Kurvenscheibe auf. Es ist ein Drehelement vorgesehen, das einen verzahnten Abschnitt aufweist und das mittels eines in einer Führungsbahn der Kurvenscheibe angeordneten, mit dem Drehelement verbundenen Führungselement drehbeweglich gekoppelt ist. Ferner ist ein Zahnradsegment angeordnet, das mit dem Drehelement im Eingriff steht, und ein mit dem Zahnradsegment verbundenen Schaltelement, das auf Schaltgabeln des mehrgängigen Wechselgetriebes einwirkt. Schließlich ist eine erste Hubeinrichtung zum axialen Verschieben des Schaltelements senkrecht zu dessen Drehachse vorgesehen. Zum Schalten und Wählen der Gänge sind zwei gesonderte Aktuatoren notwendig.

Aufgabe der Erfindung ist es, eine Schaltvorrichtung zu schaffen, bei der nur ein Aktuator zum Schalten und Wählen der Gänge notwendig ist. Diese Aufgabe wird durch die Merkmale des Anspruchs 1 gelöst. Weitere Vorteile und vorteilhafte Weiterbildungen der erfindungsgemäßen Schaltvorrichtung für ein mehrgängiges Wechselgetriebe in einem Kraftfahrzeug ergeben sich aus den Unteransprüchen und der Beschreibung.

Ein Ausführungsbeispiel der Erfindung ist in der Zeichnung dargestellt und in der folgenden Beschreibung näher erläutert. Es zeigen:
- Fig. 1: ein Blockschaltbild einer Getriebesteuerung,
- Fig. 2: eine vereinfachte Vorderansicht einer Schaltvorrichtung,
- Fig. 3: eine Seitenansicht der Schaltvorrichtung nach Fig. 2,
- Fig. 4: eine perspektivische Darstellung eines Teils der Schaltvorrichtung,
- Fig. 5: eine Draufsicht auf eine Hubscheibe,
- Fig. 6: eine Übersichtstabelle,
- Fig. 7: eine abgewandelte Hubscheibe und eine abgewandelte Ausgangswelle in einer vereinfachten Seitenansicht,
- Fig. 8: ein Teilausschnitt aus Fig. 3 mit einer abgewandelten Kurvenscheibe und einer abgewandelten Ausgangswelle,
- Fig. 9: eine schematische Vorderansicht einer Schaltvorrichtung mit einer abgewandelten Schaltkurvenbahn und einem abgewandelten Zahnradsegment und
- Fig. 10: eine abgewandelte Schaltkurvenbahn.

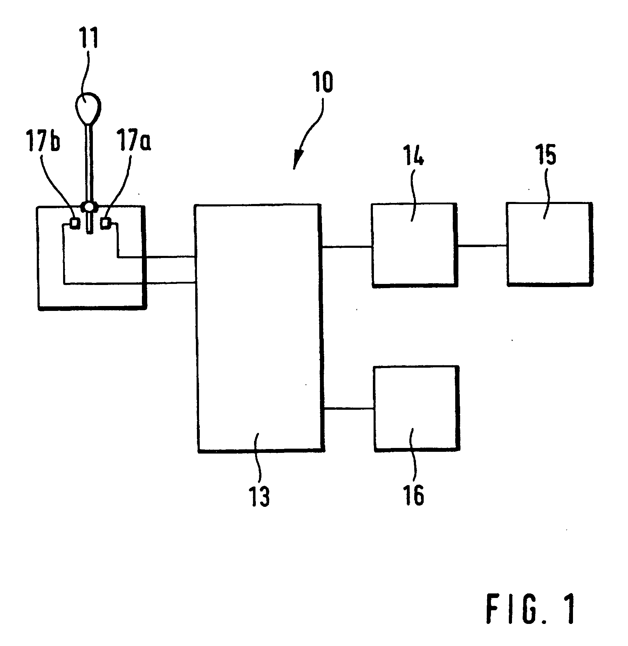

Eine in der Fig. 1 dargestellte Getriebesteuerung 10 weist einen Schaltknüppel 11 auf, der schwenkbar gelagert ist und der in seinen beiden Endlagen auf einen Kontakt 17a oder 17b einwirkt. Die beiden Kontakte 17a, 17b sind mit einer elektrischen Steuereinheit 13 verbunden. Die Steuereinheit 13 ist über eine Schaltvorrichtung 14 mit einem mehrgängigen Wechselgetriebe, im folgenden als Getriebe 15 bezeichnet, verbunden. Weiterhin ist die Steuereinheit 13 an eine Kupplung 16 angeschlossen. Durch einmaliges Betätigen des Schaltkontakts 17a durch den Schaltknüppel 11 wird um einen Gang heruntergeschaltet. Durch einmaliges Betätigen des Schaltkontakts 17b durch den Schaltknüppel 11 wird um einen Gang hochgeschaltet. Die Steuereinheit 13 gibt entsprechende elektrische Signale an die Kupplung 16 und die Schaltvorrichtung 14, die ihrerseits mechanisch auf das Getriebe 15 einwirkt und somit den gewünschten Gang einlegt. Alternativ ist auch ein vollautomatischer Betrieb denkbar. In diesem Fall werden durch Geber am Fahrzeug zum Beispiel Geschwindigkeit, Motordrehzahl, Brems- oder Gaspedalstellung ermittelt. Mit den Signalen der Geber führt die Steuereinheit 13 einen vollautomatischen Gangwechsel aus. Vom Fahrer werden keine Gänge mehr vorgegeben, sondern über den Schaltknüppel 11 lediglich ein entsprechender Automatikmodus, zum Beispiel sportliche oder wirtschaftliche Fahrweise, gewählt.

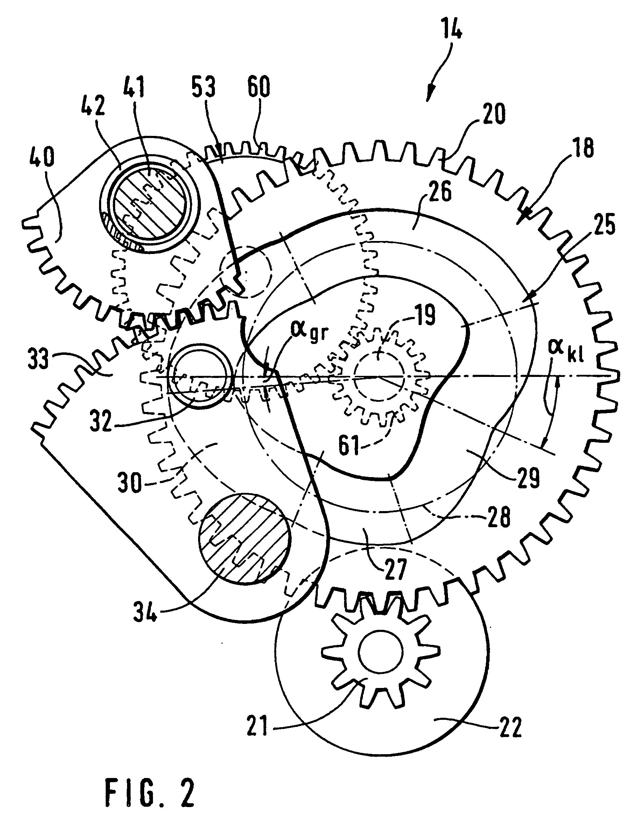

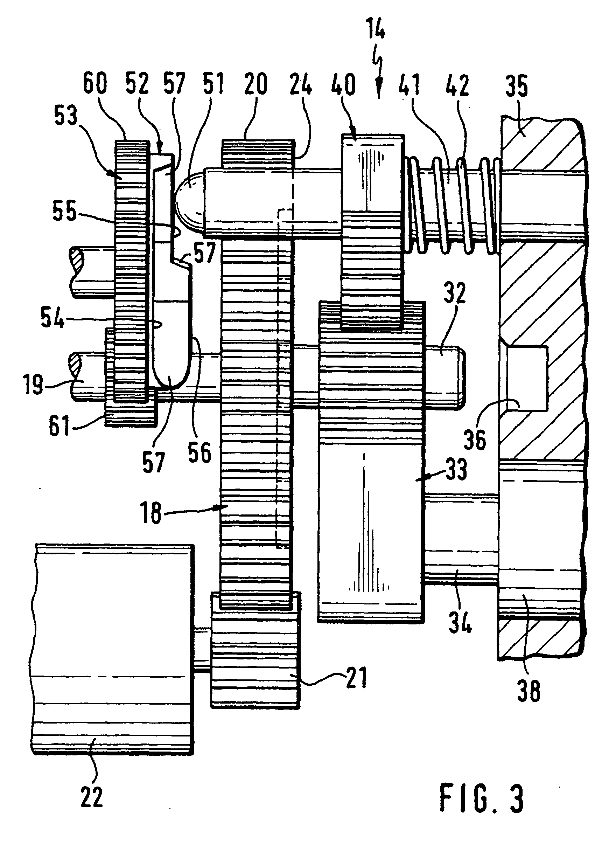

Anhand der Fig. 2 bis 6 werden der Aufbau und die Funktion der Schaltvorrichtung 14 erläutert. Eine Kurvenscheibe 18 ist in einer Mittelachse 19 drehbar gelagert. Am Außenumfang der Kurvenscheibe 18 ist ein Zahnkranz 20 ausgebildet. Der Zahnkranz 20 steht mit einem Motorritzel 21 eines Elektromotors 22 im Eingriff. In einer Stirnfläche 24 der Kurvenscheibe 18 ist eine endlose Schaltkurvenbahn 25 als Nut ausgebildet, die vier Abschnitte aufweist. Ein erster und ein zweiter Grundkreisabschnitt 26 und 27 liegen sich auf einem Grundkreis 28 gegenüber. Dazwischen liegen ein erster und ein zweiter Schaltabschnitt 29 und 30. Der mittlere Abstand des ersten Schaltabschnitts 29 zur Mittelachse 19 der Kurvenscheibe 18 ist stets kleiner oder gleich dem Radius des Grundkreises 28. In der mit αₖ₁ bezeichneten Winkelstellung hat der erste Schaltabschnitt 29 seinen kleinsten mittleren Abstand zur Mittelachse 19. Der zweite Schaltabschnitt 30 hat ebenfalls einen veränderlichen mittleren Abstand zur Mittelachse 19 der Kurvenscheibe 18, der jedoch stets größer oder gleich dem Radius des Grundkreises 28 ist. In der mit α_{gr} bezeichneten Winkelstellung hat der zweite Schaltabschnitt 30 seinen größten mittleren Abstand zur Mittelachse 19.

In der Schaltkurvenbahn 25 ist ein Zapfen 32 geführt. Der Zapfen 32 ist an einem Zwischenzahnradsegment 33 befestigt, über dessen Stirnfläche er hinausragt. Der Zapfen 32 ist außerhalb einer Drehachse 34 des Zwischenzahnradsegments 33 angeordnet. Fluchtend mit dem Zapfen 32 ist in einem Abstand zum Zwischenzahnradsegment 33 in einem Gehäuse 35 eine Arretierbohrung 36 zur Aufnahme des Zapfens 32 ausgebildet. Die Drehachse 34 des Zwischenzahnradsegments 33 wirkt als Anker eines Hubmagneten 38, der im Gehäuse 35 angeordnet ist.

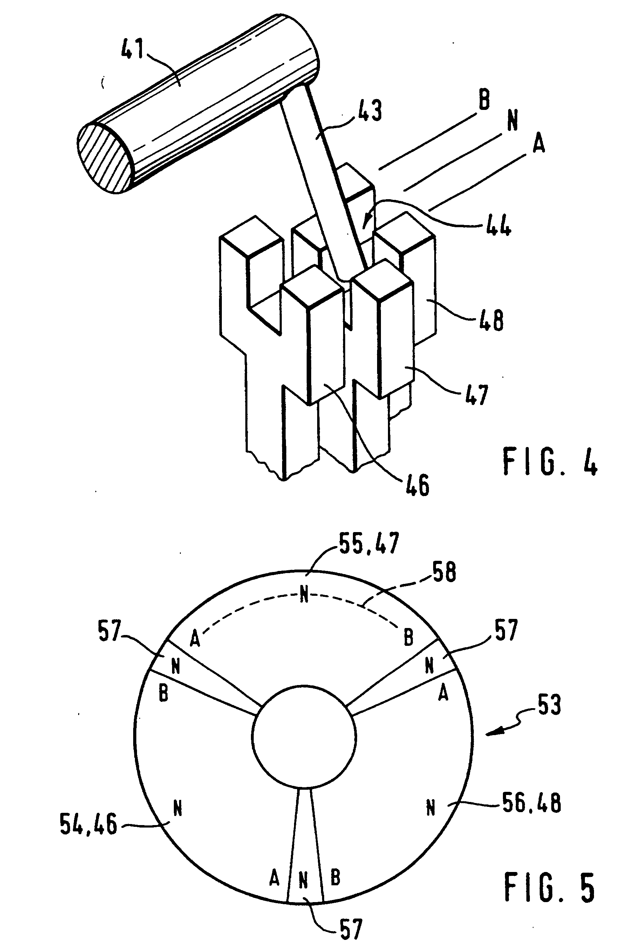

Mit dem Zwischenzahnradsegment 33 steht ein Ausgangszahnradsegment 40 im Eingriff. Das Ausgangszahnradsegment 40 ist drehfest mit einer Ausgangswelle 41 verbunden. Die Ausgangswelle 41 ist im Gehäuse 35 drehbar und verschiebbar gelagert. Auf der Ausgangswelle 41 ist zwischen dem Ausgangszahnradsegment 40 und dem Gehäuse 35 eine Spiralfeder 42 angeordnet. Die Ausgangswelle 41 ragt auf der der Kurvenscheibe 18 abgewandten Seite aus dem Gehäuse 35. Das Ende der Ausgangswelle 41 ist senkrecht zu ihrer Längsachse mit einem Schaltstift 43 verbunden (Fig. 4). Das der Ausgangswelle 41 abgewandte Ende des Schaltstifts 43 greift in eine Nut 44 einer mittleren Schaltgabel 47 ein. Insgesamt sind drei Schaltgabeln 46, 47, 48 vorgesehen, die Bestandteil des Getriebes 15 sind, und die fluchtend zueinander angeordnet sind. Jede Schaltgabel 46, 47, 48 ist aus einer mittleren Schaltposition N heraus in eine Schaltposition A bzw. eine Schaltposition B verschiebbar. Durch Verschieben der Schaltgabel 46, 47, 48 aus der Schaltposition N in die Schaltposition A oder B wird in allgemein bekannter Weise eine zum Beispiel auf der Antriebswelle des Getriebes 15 verdrehfest angeordnete Schaltmuffe durch axiales Verschieben mit einem ebenfalls auf der Antriebswelle drehbar gelagerten Zahnrad in Eingriff gebracht. Das mit dem Zahnrad der Antriebswelle in Dauereingriff befindliche Zahnrad der Abtriebswelle ist auf dieser verdrehfest angeordnet. Somit kann von der Antriebswelle über die Schaltmuffe, über das Zahnrad der Antriebswelle und das Zahnrad der Abtriebswelle ein Drehmoment auf die Abtriebswelle übertragen werden. Entsprechend der gerade mit dem Schaltstift 43 in Eingriff befindlichen Schaltgabel 46, 47, 48 sowie deren Schaltposition A bzw. B sind somit sechs Stellungen realisierbar. Diese Stellungen entsprechen fünf Vorwärtsgängen und einem Rückwärtsgang der Schaltvorrichtung 14.

Das dem Schaltstift 43 gegenüberliegende Ende der Ausgangswelle 41 ragt über die Kurvenscheibe 18 hinaus und ist als Kuppe 51 ausgebildet. Die Kuppe 51 wird aufgrund der Federkraft der Spiralfeder 42 auf eine Nockenbahn 52 gedrückt. Die Nockenbahn 52 ist stirnseitig an einer drehbar gelagerten Hubscheibe 53 ausgebildet. Die Nockenbahn 52 hat drei unterschiedlich hohe, senkrecht zur Längsachse der Ausgangswelle 41 angeordnete Ebenensegmente 54, 55, 56. Der Niveauunterschied zwischen dem Ebenensegment 54 und dem Ebenensegment 55 entspricht dem Verschiebeweg des Schaltstifts 43 zwischen den Schaltgabeln 46 und 47. Der Niveauunterschied zwischen dem Ebenensegment 55 und dem Ebenensegment 56 entspricht dem Verschiebeweg des Schaltstifts 43 zwischen den Schaltgabeln 47 und 48. Der Niveauunterschied zwischen dem Ebenensegment 56 und dem Ebenensegment 54 entspricht dem Verschiebeweg des Schaltstifts 43 zwischen den Schaltgabeln 48 und 46. Die Übergänge zwischen den einzelnen Ebenensegmenten 54 bis 56 sind als kurze, steile Schrägen 57 ausgebildet. Dies bedeutet, daß jedes der Ebenensegmente 54, 55, 56 einen Winkelbereich von nahezu 120° überdeckt. Die Hubscheibe 53 verfügt weiterhin über einen verzahnten Außenumfang 60, der mit einem Antriebsritzel 61 im Eingriff steht. Das Übersetzungsverhältnis vom Antriebsritzel 61 zum verzahnten Außenumfang 60 beträgt 3:1, d. h., daß sich bei drei Umdrehungen des Antriebsritzels 61 die Hubscheibe 53 einmal dreht. Das Antriebsritzel 61 ist auf der Mittelachse 19 drehfest angebracht. Alternativ kann das Antriebsritzel 61 auch an der Kurvenscheibe 18 selbst ausgebildet sein.

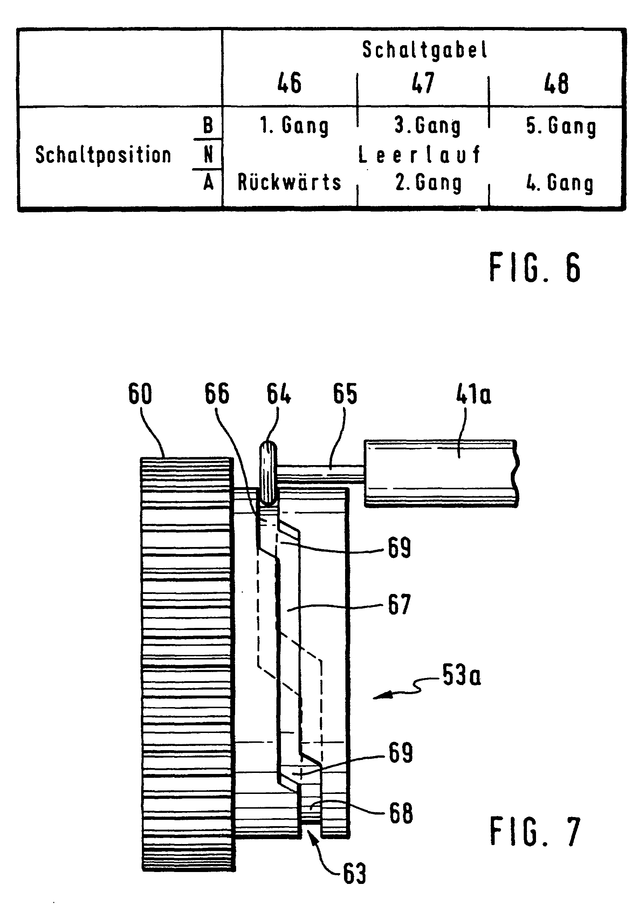

Fig. 5 zeigt aus Sicht der Ausgangswelle 41 die Zuordnung der Schaltgabeln 46 bis 48 zu den Ebenensegmenten 54 bis 56, den Schaltpositionen A, N, B, und den Schrägen 57. Die Zuordnung der einzelnen Gänge und Schaltpositionen der Schaltvorrichtung 14 ist in der Fig. 6 dargestellt. Entsprechend Fig. 4 ist somit in der Schaltvorrichtung 14 und in dem mit ihr gekoppelten Getriebe 15 der 2. Gang eingelegt.

Im folgenden wird die Funktionsweise der Schaltvorrichtung 14 bei einem Schaltvorgang beschrieben. Die in dem Getriebe 15 dabei stattfindende Änderung der Übersetzung wird hier als allgemein bekannt vorausgesetzt.

Zunächst wird ein Gangwechsel vom 2. in den 3. Gang geschildert. Hierzu muß die Schaltgabel 47 von der Schaltposition A in die Schaltposition B gebracht werden. Die Kurvenscheibe 18 ist zunächst so gedreht, daß der in der Schaltkurvenbahn 25 geführte Zapfen 32 am weitesten von der Mittelachse 19 entfernt ist. Dies ist erfüllt, wenn der Zapfen 32 mit der mit α_{gr} bezeichneten Winkelstellung fluchtet. Somit sind das Zwischenzahnradsegment 33, das Ausgangszahnradsegment 40, die Ausgangswelle 41 und der Schaltstift 43 so gedreht, daß der 2. Gang eingelegt ist. Die Steuereinheit 13 gibt nun, nach einem über den Schaltknüppel 11 und den Schaltkontakt 17b eingebrachten Impuls, das Signal an den Elektromotor 22, die Kurvenscheibe 18 mit Hilfe des Motorritzels 21 und des Zahnkranzes 20 im Uhrzeigersinn so zu drehen, daß der Zapfen 32 sich an der mit αₖ₁ bezeichneten Winkelstellung der Schaltkurvenbahn 25 befindet. Dadurch werden das Zwischenzahnradsegment 33, das Ausgangszahnradsegment 40, die Ausgangswelle 41 und der Schaltstift 43 so gedreht, daß sich die Schaltgabel 47 über die Position N in die Schaltposition B bewegt, die dem 3. Gang entspricht. Die Schaltposition N einer Schaltgabel 46, 47, 48 liegt immer dann vor, wenn der Zapfen 32 sich im ersten oder zweiten Grundkreisabschnitt 26 oder 27 befindet. Bei der Drehung der Kurvenscheibe 18 dreht sich zwangsläufig auch die Hubscheibe 53 mit. Dabei wird die Kuppe 51 aufgrund der Federkraft der Spiralfeder 42 gegen das zweite Ebenensegment 55 gedrückt. Wie aus Fig. 5 ersichtlich ist, befindet sich die Kuppe 51 vor dem Schalten vom 2. in den 3. Gang an der mit A gekennzeichneten Stelle des Ebenensegments 55. Nach dem Schalten befindet sich die Kuppe 51 an der mit B gekennzeichneten Stelle des Ebenensegements 55. Die Hubscheibe 53 dreht sich unter der Kuppe 51 beim Schaltvorgang vom 2. in den 3. Gang gemäß eines in der Fig. 5 mit 58 gekennzeichneten Teilkreisabschnitts entgegen dem Uhrzeigersinn.

Als nächstes wird ein Schaltvorgang beim Gangwechsel vom 3. in den 4. Gang beschrieben. Dazu wird die Kurvenscheibe 18 mittels des Elektromotors 22 im Uhrzeigersinn weitergedreht. Dabei gelangt die Kuppe 51 vom Ebenensegment 55 über die Schräge 57 auf das Ebenensegment 56, so daß aufgrund des Niveauunterschieds zwischen den beiden Ebenensegmenten 55 und 56 eine axiale Verschiebung der Ausgangswelle 41 hinzukommt. Dies erfolgt in dem Augenblick, in dem sich die Ausgangswelle 41 und somit der Schaltstift 43 in der Schaltposition N befinden.

Die bisherigen Ausführungen bezogen sich auf Schaltvorgänge, bei denen von einem Gang in den nächsthöheren Gang geschaltet wird. Bei Schaltvorgängen von einem Gang in einen direkt darunterliegenden Gang treten entsprechende Abläufe mit entgegengesetzter Drehrichtung der Kurvenscheibe 18 und der Hubscheibe 53 auf, was auch eine entgegengesetzte Axialverschiebung der Ausgangswelle 41 zur Folge hat.

Im Fahrbetrieb kann es auch vorkommen, daß Gänge übersprungen werden sollen. Als Beispiel sei genannt, daß das Fahrzeug vor einer Ampel mit eingelegtem 3. Gang nahezu zum Stillstand gebracht wird. Nun soll zum Anfahren direkt vom 3. Gang in den 1. Gang geschaltet werden. Damit der Schaltvorgang jedoch nicht über den 2. Gang erfolgt, was beim Weiterdrehen der Kurvenscheibe 18 der Fall wäre, muß die Drehbewegung der Ausgangswelle 41 verhindert werden, so daß von der zweiten Schaltgabel 47 in die erste Schaltgabel 46 gewechselt werden kann, ohne daß zuvor der 2. Gang eingelegt wird. Hierzu dient der Hubmagnet 38. Sobald die Schaltposition N erreicht ist, befindet sich der Zapfen 32 auf dem Grundkreis 28 im Grundkreisabschnitt 27. Dabei fluchtet er mit der Arretierbohrung 36. Nun wird durch ein entsprechendes Ansteuersignal durch die Steuereinheit 13 an den Hubmagneten 38 bewirkt, daß das Zwischenzahnradsegment 33 und der Zapfen 32 axial so verschoben werden, daß sich der Zapfen 32 nicht mehr im Eingriff mit der Schaltkurvenbahn 25 befindet. Gleichzeitig ist das Zwischenzahnradsegment 33 durch den in die Arretierbohrung 36 eingeführten Zapfen 32 gegen Verdrehen gesichert. Die Verzahnungen des Ausgangszahnradsegments 40 und des Zwischenzahnradsegments 33 kämmen weiterhin miteinander, so daß auch ein Verdrehen der Ausgangswelle 41 verhindert wird. Die Kurvenscheibe 18 und somit auch die Hubscheibe 53 können nun weitergedreht werden, bis sich das erste Ebenensegment 54 unter der Kuppe 51 befindet. Die Spiralfeder 42 drückt die Ausgangswelle 41 und den sich in der Schaltposition N befindlichen Schaltstift 43 in die erste Schaltgabel 46. Nun wird der Zapfen 32 durch Abschalten des Hubmagneten 38 wieder in Eingriff mit dem Grundkreis 28 gebracht. Beim Weiterdrehen der Kurvenscheibe 18 wird folglich die Ausgangswelle 41 und der Schaltstift 43 in die Schaltposition B gedreht, der 1. Gang ist eingelegt.

Für das Überspringen anderer Gänge gelten analoge Vorgänge. Hierbei muß beachtet werden, daß der Hubmagnet 38 nur aktiviert werden darf, wenn sich der Zapfen 32 in einem Abstand von der Mittelachse 19 befindet, der dem Radius des Grundkreises 28 entspricht. Dies wird beispielsweise mit einem nicht dargestellten Geber überwacht, der die Winkellage der Ausgangswelle 41 an die Steuereinheit 13 meldet.

Die Anzahl der Ebenensegmente und die Übersetzung vom Antriebsritzel zur Hubscheibe (ins Langsame) muß der Zahl der Schaltgabeln des Getriebes entsprechen; das heißt konkret: zwei Schaltgabeln benötigen zwei Ebenensegmente und eine Übersetzung von 2:1, während für vier Schaltgabeln vier Ebenen und eine Übersetzung von 4:1 benötigt werden. Weiterhin ist die Übersetzung von konstruktiven Gegebenheiten abhängig.

Fig. 7 zeigt ein abgewandeltes Ausführungsbeispiel mit einer Hubscheibe 53a und einer Ausgangswelle 41a. Statt der stirnseitig ausgebildeten Nockenbahn 52 ist am Außenumfang der Hubscheibe 53a außer der Verzahnung 60, an einem von der Verzahnung 60 abgesetzten Abschnitt, eine umlaufende, endlose Nut 63 ausgebildet. Die Nut 63 hat analog zur Nockenbahn 52 drei axial versetzte Bereiche 66, 67, 68, deren gegenseitiger Versatz dem Verschiebeweg der Schaltgabeln 46 bis 48 entspricht. Die Ausgangswelle 41a hat an ihrem einen Ende einen Bund bzw. Wulst 64, der mittels eines zylindrisch ausgebildeten Abschnitts 65 mit der Ausgangswelle 41a verbunden ist. Die Nut 63 ist so ausgebildet, daß sie den Wulst 64 aufnehmen kann. In Übergangsbereichen 69 zwischen den Bereichen 66, 67, 68 ist die Nut 63 etwas breiter in ihrem Querschnitt ausgebildet, so daß der Wulst 64 in der Nut 63 die erforderliche axiale Bewegung beim Übergang von einem Bereich in einen anderen Bereich durchführen kann. Für Getriebe mit einer anderer Anzahl an Schaltgabeln gelten für die Zahl der Bereiche 66, 67, 68 analoge Überlegungen wie für die Nockenbahn 52. Beim zweiten Ausführungsbeispiel kann durch die Führung des Wulstes 64 in der Nut 63 auf die Spiralfeder 42 verzichtet werden. Die Hubscheibe 53a kann wie dargestellt einteilig, oder aus zwei Teilen, einem Zahnkranz oder Zahnrad und einer darauf befestigten Scheibe, in der die Nut 63 ausgebildet ist, zusammengesetzt sein.

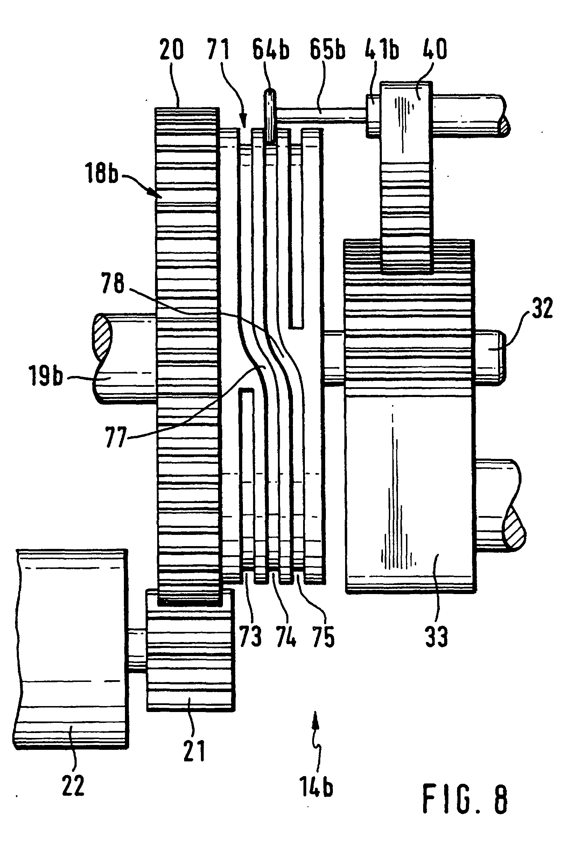

In der Fig. 8 ist eine Schaltvorrichtung 14b dargestellt, die keine Hubscheibe 53 aufweist. Statt dessen ist am Außenumfang der Kurvenscheibe 18a eine wendelförmige Nut 71 zur Verschiebung der Ausgangswelle 41b ausgebildet. Die Nut 71 hat drei parallel zueinander angeordnete Gänge 73, 74, 75, deren Abstände untereinander den Abständen zwischen den Schaltgabeln 46, 47, 48 entsprechen. Die Gänge 73, 74 sind durch einen Übergangsbereich 77 und die Gänge 74, 75 sind durch einen Übergangsbereich 78 miteinander verbunden. In die Nut 71 greift der Wulst 64b, der über den Abschnitt 65b mit der Ausgangswelle 41b verbunden ist. Diese steht über das Ausgangszahnradsegment 40 mit dem Zwischenzahnradsegment 33 im Eingriff. Das Zwischenzahnradsegment 33 ist mittels des Zapfens 32 in der Kurvenscheibe 18b geführt. Die Kurvenscheibe 18b weist den Zahnkranz 20 auf, über den die Kurvenscheibe 18b mittels des Ritzels 21 vom Elektromotor 22 angetrieben wird. Es ist auch möglich, daß die Kurvenscheibe 18b über die Mittelachse 19b auf einem Motor mit Untersetzungsgetriebe montiert, und auf diese Weise angetrieben wird.

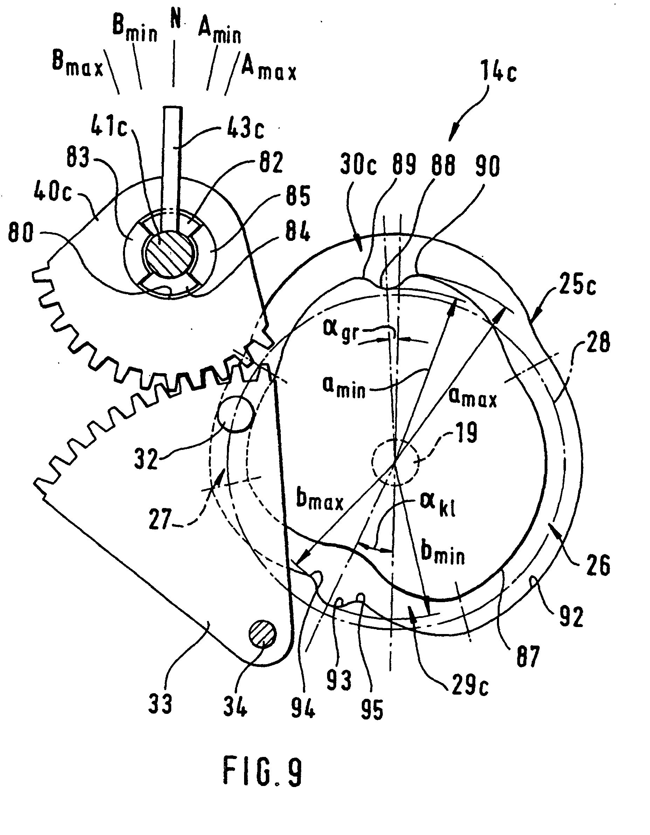

Die bisherigen Ausführungen bezogen sich auf Getriebe 15, bei denen die Schaltpositionen A, B sehr eng toleriert sind. In der Praxis kommt es jedoch häufig vor, daß die Schaltpositionen A, B Toleranzen aufweisen, die im Bereich von einigen Millimetern liegen. In der Figur 9 ist dies anhand einer schematisch dargestellten Schaltvorrichtung 14c gezeigt.

Ausgehend von der mittleren Schaltposition N kann der Schaltstift 43 eine Position einnehmen, die zwischen Aₘᵢₙ und Aₘₐₓ bzw. Bₘᵢₙ und Bₘₐₓ liegt; dies sind die Bereiche, in denen die Schaltgabeln 46, 47, 48 ihre tatsächlichen Schaltpositionen haben. Aₘᵢₙ und Bₘᵢₙ liegen jeweils näher bei der Schaltposition N und Aₘₐₓ und Bₘₐₓ liegen weiter davon entfernt. Die Abstände zwischen Aₘᵢₙ und Aₘₐₓ bzw. Bmin und Bₘₐₓ entsprechen den größten zu erwartenden Toleranzen der Schaltposition der Schaltgabeln 46, 47, 48 im Getriebe 15.

Die Ausgangswelle 41c des Schaltstifts 43 ist zentrisch in einer Bohrung 80 angeordnet, die im Ausgangszahnradsegment 40c ausgebildet ist. Die Bohrung 80 hat einen größeren Durchmesser als die Ausgangswelle 41c. Der dadurch entstehenden ringförmige Raum wird von vier gleich großen Ringsegmenten 82, 83, 84, 85 ausgefüllt. Die einander gegenüberliegend angeordneten Ringsegmente 82, 84 sind an der Ausgangswelle 41c befestigt. Die beiden anderen ebenfalls einander gegenüberliegend angeordneten Ringsegmente 83, 85 sind an der Bohrung 80 verankert. Die Ringsegmente 82, 83, 84, 85 bestehen aus einem elastischen Werkstoff und überdecken in unmontiertem Zustand jeweils einen Winkel von mehr als 90°, wodurch zwischen den montierten Ringsegmenten 82, 83, 84, 85 eine Vorspannung entsteht. Durch zwei nicht dargestellte Sicherungsringe oder Sicherungsscheiben sind das Ausgangszahnradsegment 40c und die Ausgangswelle 41c gegen axiales Verrutschen gesichert.

Die innere Wandung 87 der Schaltkurvenbahn 25c weist im Schaltkreisabschnitt 30c an der mit α_{gr} bezeichneten Stelle eine erste Ausformung 88 auf, deren kleinster Abstand zur Drehachse 19 mit aₘᵢₙ bezeichnet ist. Rechts und links von der ersten Ausformung 88 befinden sich zwei Stellen 89 und 90, die einen Abstand aₘₐₓ zur Drehachse 19 haben, wobei dies den größten Abstand der inneren Wandung 87 im Schalkreisabschnitt 30c darstellt. Die äußere Wandung 92 der Schaltkurvenbahn 25c weist im Schaltkreisabschnitt 29c an der mit αₖ₁ bezeichneten Stelle eine zweite Ausformung 93 auf. Die zweite Ausformung 93 weist vom Zentrum der Schaltkurvenbahn 25c weg und hat einen größten Abstand von bₘᵢₙ. Neben der zweiten Ausformung 93 weist der Schaltabschnitt 29c zwei Stellen 94 und 95 auf, die jeweils einen Abstand zur Drehachse 19 von bₘₐₓ haben. Der Abstand bₘₐₓ stellt den kleinsten Abstand der äußeren Wandung 92 im Schaltkreisabschnitt 29c zur Drehachse 19 dar.

Der Zapfen 32 des Zwischenzahnradsegments 33 befindet sich in der dargestellten Stellung im Grundkreisabschnitt 27. Deshalb befindet sich auch der Schaltstift 43 in der mittleren Schaltposition N. Soll der Schaltstift 43 nun in die Schaltposition A gebracht werden, so muß sich die Schaltkurvenbahn 25c entgegen dem Uhrzeigersinn drehen. Wenn der Zapfen 32 den Schaltkreisabschnitt 30c erreicht, wird er ausgelenkt, da der Abstand des Schaltkreisabschnittes 30c gegenüber der Drehachse 19 zunimmt. Deshalb wird auch das Zwischenzahnradsegment 33 entgegen dem Uhrzeigersinn gedreht. Aufgrund der Verzahnung des Zwischenzahnradsegments 33 und des Ausgangszahnradsegments 40c wird das Ausgangszahnradsegment 40c im Uhrzeigersinn gedreht. Diese Drehbewegung wird über die miteinander in Wirkeingriff stehenden elastischen Ringsegmente 82 bis 85 auf die Ausgangswelle 41c und somit auch auf den Schaltstift 43c übertragen.

Nachfolgend sollen zwei unterschiedliche Stellungen des Schaltstifts 43 erörtert werden: Im ersten Fall ist die Schaltposition einer Schaltgabel 46, 47, 48 erst an der Stelle Aₘₐₓ des Schaltstifts 43 erreicht, während dies im anderen Fall bereits an der Stelle Aₘᵢₙ erfüllt ist.

Im ersten Fall ist der Zapfen 32 an der Stelle 89 am weitesten nach außen gelenkt. Der Abstand aₘₐₓ zur Drehachse 19 und die Vorspannung der elastischen Ringsegmente 82 bis 85 sind so bemessen, daß die Schaltposition Aₘₐₓ auf jeden Fall erreicht wird. Tritt dies ein, so wird die vom Schaltstift 43 geschaltete Schaltgabel 46, 47, 48 in dieser Schaltposition im Getriebe 15 in bekannter Weise arretiert. Die Führungsbahn 25c dreht sich noch ein Stück weiter, bis der Zapfen 32 an der mit α_{gr} bezeichneten Stelle angelangt. Die angestiegene Spannung in den elastischen Ringsegmenten 82 bis 85 löst sich, und der Zapfen 32 nimmt eine Position ein, die etwas näher zur der Drehachse 19 liegt.

Nun wird der Fall erörtert, bei dem die Schaltposition Aₘᵢₙ schon erreicht ist, bevor die maximale Auslenkung des Zapfens 32 im Schaltkreisabschnitt 30c an der Stelle 89 erreicht ist. Die Schaltgabel 46, 47, 48 wird bei Erreichen der Schaltposition Aₘᵢₙ arretiert. Zwar werden das Zwischenzahnradsegment 33 und das Ausgangszahnradsegment 40c noch weiter ausgelenkt, der Schaltstift 43 und die Ausgangswelle 41c drehen sich jedoch aufgrund des elastischen Verhaltens der Ringsegmente 82 bis 85 nicht weiter. Erreicht der Zapfen 32 nun die mit α_{gr} bezeichnete Stelle, so gelangt er in den Bereich der ersten Ausformung 88. Der Abstand aₘᵢₙ ist so bemessen, daß bei einer Schaltposition Aₘᵢₙ das ganze System frei von mechanischen Spannungen ist. Entsprechend den Schaltpositionen Aₘᵢₙ und Aₘₐₓ treten analoge Abläufe ein, wenn der Schaltstift 43 in die Positionen Bₘᵢₙ, Bₘₐₓ gebracht werden soll, mit dem Unterschied, daß der Zapfen 32 in den Bereich des Schaltkreisabschnitts 29c gelangt.

Eine weitere Möglichkeit, anstelle der Ringsegmente 82 bis 85 ein elastisches Element vorzusehen, ist auch, den Zapfen 32 in einem Langloch, das im Zwischenzahnradsegment 33 ausgebildet ist, anzuordnen. Der Zapfen 32 ist dann auf jeder Seite im Langloch ebenfalls von vorgespannten elastischen Elementen abgestützt. Es ist auch denkbar, den Schaltstift 43 zum Beispiel aus Federstahl auszuführen, so daß durch die Form und Anordnung des Schaltstifts 43 die Elastizität gegeben ist.

Wesentlich bei den oben genannten Ausführungen ist, daß ein elastisches Element so vorgespannt ist, daß die größte zu erwartende Kraft beim Schalten einer Schaltgabel 46 bis 48 übertragen werden kann. Ferner sind daraufhin die Abstände aₘₐₓ und bₘₐₓ so zu bemessen, daß die Schaltpositionen Aₘₐₓ und Bₘₐₓ in jedem Fall erreicht werden können. Außerdem sind die Abstände aₘᵢₙ und bₘᵢₙ der Ausformungen 88 und 93 so zu bemessen, daß der Schaltstift 43 bei deren Erreichen keine oder nur eine geringe Kraft auf die Schaltgabeln 46 bis 48 ausübt. Bei einer zu großen Kraft würden die Schaltgabeln 46 bis 48 ständig diese Kraft auf die Synchronisiereinrichtungen übertragen, was mit erhöhtem Verschleiß verbunden wäre. Ist diese Kraft jedoch nicht zu groß, kann auf die Ausformungen 88 und 93 mit den Abständen aₘᵢₙ und bₘᵢₙ verzichtet werden.

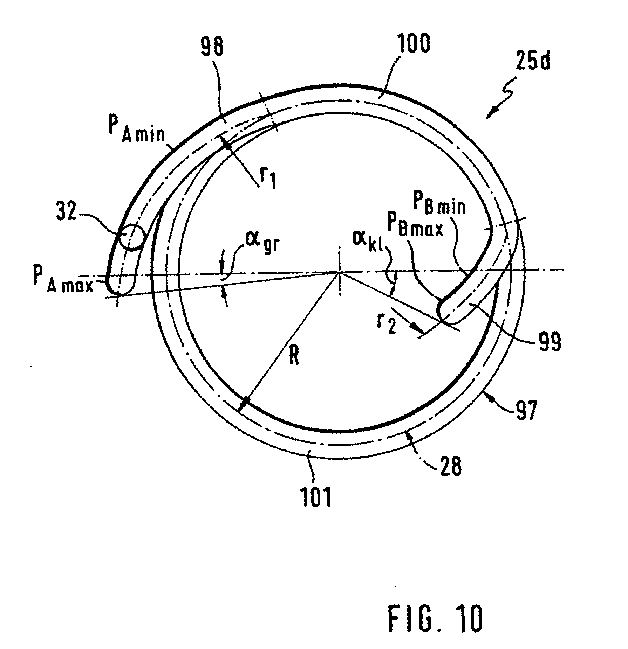

In der Figur 10 ist eine abgewandelte Schaltkurvenbahn 25d dargestellt, mit der sich die Schaltvorrichtung 14 ebenfalls auf Getriebe 15 mit großen Toleranzen der Schaltpositionen A, B anwenden läßt. Die Schaltkurvenbahn 25d besteht aus einer Kreisbahn 97, von der zwei Kurvensegmente 98, 99 abzweigen. Das erste Kurvensegment 98 ist nach außen gerichtet und hat einen Radius r₁, der stets größer oder gleich dem Radius R der Kreisbahn 97 ist. Das zweite Kurvensegment 99 ist nach innen gerichtet und hat einen Radius r₂, der stets kleiner oder gleich dem Radius R der Kreisbahn 97 ist. Die Kreisbahn 97 hat einen mittleren Durchmesser, der dem Durchmesser des Grundkreises 28 entspricht. Das Kurvensegment 98 endet an der mit α_{gr} bezeichneten Stelle. Das Kurvensegment 99 endet an der mit αₖ₁ bezeichneten Position. Die Kurvensegmente 98, 99 und der von ihnen eingeschlossene Kreisbahnabschnitt 100 liegen axial tiefer als der übrige Kreisbahnabschnitt 101.

Bei der Montage des Getriebes 15 werden zunächst die exakten Schaltpositionen A, B der Schaltgabeln 46, 47, 48 ermittelt. Dies kann beispielsweise an einer automatischen Meßstation erfolgen, die in die Montagelinie für das Getriebe 15 integriert ist. Dann werden die ermittelten Werte in der Steuerung 13 der Getriebesteuerung 10 gespeichert. Die ermittelten Werte für die Schaltpositionen A liegen auf dem Kurvensegment 98 zwischen den mit P_{Amin} und P_{Amax} bezeichneten Stellen. Die ermittelten Werte für die Schaltposition B liegen auf dem Kurvensegment 99 zwischen den mit P_{Bmin} und P_{Bmax} bezeichneten Stellen.

Befindet sich der Schaltstift 43 zum Beispiel in der Schaltposition A der Schaltgabel 47, so liegt auch der Zapfen 32 an einer dazu korrespondierenden Stelle zwischen P_{Amin} und P_{Amax} des Kurvensegments 98. Soll die Schaltgabel 47 nun in die Schaltposition B gebracht werden, so dreht sich die Schaltkurvenbahn 25d entgegen dem Uhrzeigersinn. Der Zapfen 32 folgt der Schaltkurvenbahn 25d, bis er an die Position zwischen P_{Bmin} und P_{Bmax} des Kurvensegments 99 gelangt, die bei der Montage des Getriebes 15 ermittelt und in der Steuerung 13 gespeichert wurde.

Soll nun von der Schaltposition B der Schaltgabel 47 in die Schaltposition A der Schaltgabel 48 gewechselt werden, so dreht sich die Schaltkurvenbahn 25d im Uhrzeigersinn. Der Zapfen 32 verläßt das Kurvensegment 99 und gelangt zunächst in den Kreisbahnabschnitt 100. Dort hebt der Hubmagnet 38 den Zapfen 32 zusammen mit dem Zwischenzahnradsegment 33 ein Stück weit an. Da der Zapfen 32 in der Arretierbohrung 36 des Gehäuses 35 arretiert ist, bleibt er, wenn sich die Schaltkurvenbahn 25d weiter dreht, im Kreisbahnabschnitt 101. Der Schaltstift 43 befindet sich nun in der Schaltposition N der Schaltgabel 47. Beispielsweise durch die Hubscheibe 53 wird die Ausgangswelle 41 nun in die Nut 44 der Schaltgabel 48 geschoben. Der Zapfen 32 erreicht dann den Kreisbahnabschnitt 100 und wird vom Hubmagneten 38 wieder abgesenkt. Sobald der Zapfen 32 das Kurvensegment 98 erreicht, beginnt auch der Schaltstift 43 sich in Richtung der Schaltposition A zu bewegen. Die Drehung der Schaltkurvenbahn 25d endet an der bei der Fertigung des Getriebes 15 ermittelten Stelle des Kurvensegments 98, die mit der exakten Position der Schaltgabel 48 in der Schaltposition A korrespondiert.

Es sei noch erwähnt, daß im oben beschriebenen Fall der Kreisbahnabschnitt 100 und die Arretierbohrung 36 gemeinsam verwendet werden. Dies hat den Vorteil, daß der Hubmagnet 38 nicht für sehr hohe Beschleunigungen ausgelegt werden muß, um den Zapfen 32 in seiner axialen Position zu halten. Ist der Hubmagnet 38 hingegen entsprechend stark ausgelegt, kann entweder die Arretierbohrung 36 oder der Kreisbahnabschnitt 101 entfallen.

Bevor in einem mehrgängigen Wechselgetriebe ein neuer Gang eingelegt wird, müssen die Umfangsgeschwindigkeiten zweier zusammenwirkender Zahnräder mit Hilfe von Synchronisiereinrichtungen angepaßt werden. Da bei Handschaltgetrieben die Gänge infolge der Bewegung des Schalthebels manuell eingelegt werden, kann die Geschwindigkeit, mit der dies geschieht, und die damit verbundene Kraft sehr variieren. Deshalb müssen die Synchronisiereinrichtungen robust ausgelegt werden, um auch hohe Kräfte aufnehmen zu können, was gleichbedeutend mit zusätzlichem Gewicht und Platzbedarf ist. Durch entsprechendes Abstimmen der Form der Schaltkurvenbahn 25 und der Synchronisiereinrichtungen des Getriebes 15 kann dadurch gegenüber herkömmlichen Schaltgetrieben Gewicht und Platz gespart werden.

Bei den beschriebenen Ausführungsbeispielen wird durch eine axiale Bewegung der Ausgangswelle 41 und des Schaltstifts 43 zwischen den Schaltgabeln 46, 47, 48 gewechselt und durch eine Drehbewegung der Ausgangswelle 41 und des Schaltstifts 43 ein Gang eingelegt. Es ist aber auch möglich, wenn zum Beispiel Platzgründe im Kraftfahrzeug dies erfordern, die Schaltvorrichtung 14 um 90° versetzt anzuordnen. In diesem Fall wird durch eine Drehbewegung der Ausgangswelle 41 und des Schaltstifts 43 zwischen den Schaltgabeln 46, 47, 48 gewechselt und durch eine axiale Bewegung der Ausgangswelle 41 und des Schaltstifts 43 ein Gang eingelegt. Soll in diesem Fall ebenfalls, wie weiter oben beschrieben, ein elastisches Element zur Anpassung an Toleranzen der Schaltpositionen vorgesehen werden, so kann dies zum Beispiel durch eine zweiteilige Ausgangswelle realisiert werden, wobei die beiden Einzelwellen mit einem elastischen Element verbunden sind. Zu beachten ist in diesem Fall, daß eine angepaßte Lagerung der Einzelwellen oder ein biegesteifes elastisches Element vorzusehen sind.

Obwohl bei der Getriebesteuerung 10 kein Kupplungspedal für den Schaltvorgang notwendig ist, kann ein solches dennoch vorgesehen werden, wodurch wie bei einem normalen Handschaltgetriebe geschaltet werden kann.

Der Schaltknüppel 11 kann auch andersartig, beispielsweise als Schalter, ausgebildet sein.

Statt eines Hubmagneten 38 kann auch ein sogenannter Spindelmotor verwendet werden. Ein Spindelmotor setzt eine rotatorische Bewegung des Rotors in eine Linearbewegung der Welle um. Die dazugehörige Darstellung in der Zeichnung wäre die gleiche.

Weiterhin kann unter Umständen das Anheben des Zapfens 32 mittels des Hubmagneten 38 oder eines Spindelmotors entfallen. Bei einem Schaltvorgang, bei dem beispielsweise vom 3. in den 1. Gang geschaltet wird, kann über den 2. Gang geschaltet werden. Dabei muß lediglich die Steuereinheit 13 bis zum Ende des Schaltvorgangs die Kupplung 16 betätigen.

Auch muß der Zapfen 32 nicht zwischen der Verzahnung des Zwischenzahnradsegments 33 und dessen Drehachse 34 angeordnet sein, wenn eine andere Lage zum Beispiel bessere Hebelverhältnisse ergibt.

Die Kräfte, die von der Schaltkurvenbahn 25, 25c, 25d auf den Zapfen 32 übertragen werden, variieren. Diese Kräfte wiederum erzeugen eine zwischen dem Zapfen 32 und der Schaltkurvenbahn 25, 25c, 25d wirkende Flächenpressung, die ebenfalls variiert. Falls die größte zu erwartende Flächenpressung an einer Stelle in der Schaltkurvenbahn 25, 25c, 25d eine Materialschädigung zur Folge hätte, so kann die Form des Zapfens 32 der Form der Schaltkurvenbahn 25, 25c, 25d an dieser Stelle angepaßt werden. Dadurch wird eine größere wirksame Fläche geschaffen, wodurch die Flächenpressung sinkt. Bei unterschiedlichen Getrieben 15 kann die größte Flächenpressung an einer jeweils verschiedenen Stelle liegen. Ersetzt man das in der Schaltkurvenbahn 25, 25c, 25d geführte Ende des Zapfens 32 durch einen aufsteckbaren, eventuell drehbar gelagerten Gleitstein oder Gleitschuh, so muß zur Anpassung des Zapfens 32 lediglich die Form des Gleitsteins für das jeweilige Getriebe 15 ausgelegt werden.

## Patentansprüche

1. Schaltvorrichtung (14; 14b) für ein mehrgängiges Wechselgetriebe (15) eines Kraftfahrzeugs,
- mit einer mit einem Antrieb (22) gekoppelten, drehbeweglich angeordneten Kurvenscheibe (18; 18b),
- mit einem Drehelement (33), das einen verzahnten Abschnitt aufweist, und das mittels eines in einer Führungsbahn (25; 25c; 25d) der Kurvenscheibe (18; 18b) angeordneten, mit dem Drehelement (33) verbundenen Führungselements (32) drehbeweglich verbunden ist,
- mit einem Zahnradsegment (40, 40c), das mit dem verzahnten Abschnitt des Drehelements (33) im Eingriff steht,
- mit einem mit dem Zahnradsegment (40, 40c) verbundenen Schaltelement (41, 43; 41a, 43; 41b, 43; 41c, 43), das bei Drehung des Drehelements zum Schalten von Gängen auf Schaltgabeln (46, 47, 48) des mehrgängigen Wechselgetriebes (15) einwirkt,
- und mit einer mit dem Antrieb (22) zwangsläufig gekoppelten, ersten Hubeinrichtung (53; 53a; 71) zum axialen Verschieben des Schaltelements (41, 43; 41 a, 43; 41 b, 43; 41c, 43) senkrecht zu dessen Drehachse, um die jeweilige Schaltgabel zu wählen.

2. Schaltvorrichtung nach Anspruch 1, **dadurch gekennzeichnet, daß** eine zweite Hubeinrichtung (38) zum axialen Versetzen des Drehelements (33) und des Führungselements (32) in bezug auf die Kurvenscheibe (18; 18b) vorgesehen ist.

3. Schaltvorrichtung nach Anspruch 2, **dadurch gekennzeichnet, daß** die zweite Hubeinrichtung ein Hubmagnet (38) oder ein Spindelmotor ist.

4. Schaltvorrichtung nach einem der Ansprüche 1 bis 3, **dadurch gekennzeichnet, daß** die erste Hubeinrichtung (53; 53a; 71) mit der Kurvenscheibe (18; 18b) gekoppelt ist.

5. Schaltvorrichtung nach einem der Ansprüche 1 bis 4, **dadurch gekennzeichnet, daß** der Antrieb für die Kurvenscheibe (18; 18b) ein Elektromotor (22) ist.

6. Schaltvorrichtung nach einem der Ansprüche 1 bis 5, **dadurch gekennzeichnet, daß** mindestens ein erster Abschnitt (26, 27) der Führungsbahn (25, 25c) der Kurvenscheibe (18; 18b) einer neutralen Schaltposition (N) des mehrgängigen Wechselgetriebes (15) entspricht.

7. Schaltvorrichtung nach einem der Ansprüche 1 bis 6, **dadurch gekennzeichnet, daß** zwei zweite Abschnitte (29, 30; 29c, 30c) der Führungsbahn (25, 25c) der Kurvenscheibe (18; 18b) zwei Schaltpositionen (A, B; Aₘᵢₙ, Aₘₐₓ, Bₘᵢₙ, Bₘₐₓ) der Schaltgabeln (46 bis 48) entsprechen.

8. Schaltvorrichtung nach Anspruch 7, **dadurch gekennzeichnet, daß** die zwei zweiten Abschnitte (29c, 30c) der Führungsbahn (25c) der Kurvenscheibe (18; 18b) Ausformungen (88, 93) aufweisen, durch die die Schaltgabeln (46, 47, 48) bei Erreichen ihrer Schaltpositionen (A, B; Aₘᵢₙ, Aₘₐₓ, Bₘᵢₙ, Bₘₐₓ) frei von mechanischen Spannungen sind.

9. Schaltvorrichtung nach einem der Ansprüche 1 bis 8, **dadurch gekennzeichnet, daß** zwischen der Führungsbahn (25, 25c) der Kurvenscheibe (18; 18b) und den Schaltgabeln (46 bis 48) mindestens ein elastisches Element (82 bis 85) zum Ausgleich von Toleranzen der Schaltpositionen (Aₘᵢₙ, Aₘₐₓ, Bₘᵢₙ, Bₘₐₓ) angeordnet ist.

10. Schaltvorrichtung nach einem der Ansprüche 1 bis 5, **dadurch gekennzeichnet, daß** die Führungsbahn (25d) zumindest teilweise aus einer Kreisbahn (97) und zwei davon abzweigenden Kurvensegmenten (98, 99) besteht, daß die Kreisbahn (97) einer neutralen Schaltposition (N) der Schaltgabeln 46, 47, 48 entspricht, und daß die zwei Kurvensegmente (98, 99) zwei Schaltpositionen der Schaltgabeln (A, B) entsprechen.

11. Schaltvorrichtung nach Anspruch 10, **dadurch gekennzeichnet, daß** ein Teil (101) der Kreisbahn (97) gegenüber den Kurvensegmenten (98, 99) axial versetzt ist.

12. Schaltvorrichtung nach einem der Ansprüche 1 bis 11, **dadurch gekennzeichnet, daß** Schaltgabeln (46 bis 48) und Schaltpositionen (A, B, N; Aₘᵢₙ, Aₘₐₓ, Bₘᵢₙ, Bₘₐₓ, N) mittels eines Betätigungselements (11) und/oder mittels einer elektronischen Regelung (13) vorgegeben werden.

## Claims

1. Selector device (14; 14b) for a multi-speed gearbox (15) of a motor vehicle,
- with a rotatably arranged cam disc (18; 18b) coupled to a drive (22),
- with a turning element (33), which has a toothed portion and is connected rotatably to a guide element (32) arranged in a guide track (25; 25c; 25d) of the cam disc (18; 18b) and is connected to the turning element (33),
- with a gear segment (40, 40c), which is in engagement with the toothed portion of the turning element (33),
- with a selector element (41, 43; 41a, 43; 41b, 43; 41c, 43), which is connected to the gear segment (40, 40c) and, when the turning element is turned, acts on selector forks (46, 47, 48) of the multi-speed gearbox (15) to select gears,
- and with a first translation device (53; 53a; 71), which is coupled positively to the drive (22) and is intended for the axial displacement of the selector element (41, 43; 41a, 43; 41b, 43; 41c, 43) perpendicularly to its axis of rotation in order to choose the respective selector fork.

2. Selector device according to Claim 1, **characterized in that** a second translation device (38) for the axial movement of the turning element (33) and of the guide element (32) in relation to the cam disc (18; 18b) is provided.

3. Selector device according to Claim 2, **characterized in that** the second translation device is a solenoid (38) or a spindle motor.

4. Selector device according to one of Claims 1 to 3, **characterized in that** the first translation device (53; 53a; 71) is coupled to the cam disc (18; 18b).

5. Selector device according to one of Claims 1 to 4, **characterized in that** the drive for the cam disc (18; 18b) is an electric motor (22).

6. Selector device according to one of Claims 1 to 5, **characterized in that** at least one first portion (26, 27) of the guide track (25, 25c) of the cam disc (18; 18b) corresponds to a neutral selection position (N) of the multi-speed gearbox (15).

7. Selector device according to one of Claims 1 to 6, **characterized in that** two second portions (29, 30; 29c, 30c) of the guide track (25, 25c) of the cam disc (18; 18b) correspond to two selection positions (A, B; Aₘᵢₙ, Aₘₐₓ, Bₘᵢₙ, Bₘₐₓ) of the selector forks (46 to 48).

8. Selector device according to Claim 7, **characterized in that** the two second portions (29c, 30c) of the guide track (25c) of the cam disc (18; 18b) have recesses (88, 93), by virtue of which the selector forks (46, 47, 48) are free of mechanical stresses when they reach their selection positions (A, B; Aₘᵢₙ, Aₘₐₓ, Bₘᵢₙ, Bₘₐₓ).

9. Selector device according to one of Claims 1 to 8, **characterized in that** at least one flexible element (82 to 85) is arranged between the guide track (25, 25c) of the cam disc (18; 18b) and the selector forks (46 to 48) to compensate for tolerances of the selection positions (Aₘᵢₙ, Aₘₐₓ, Bₘᵢₙ, Bₘₐₓ).

10. Selector device according to one of Claims 1 to 5, **characterized in that** the guide track (25d) at least partially comprises a circular track (97) and two cam segments (98, 99) that branch off from the latter, **in that** the circular track (97) corresponds to a neutral selection position (N) of the selector forks (46, 47, 48), and **in that** the two cam segments (98, 99) correspond to two selection positions of the selector forks (A, B).

11. Selector device according to Claim 10, **characterized in that** part (101) of the circular track (97) is offset axially relative to the cam segments (98, 99).

12. Selector device according to one of Claims 1 to 11, **characterized in that** selector forks (46 to 48) and selection positions (A, B, N; Aₘᵢₙ, Aₘₐₓ, Bₘᵢₙ, Bₘₐₓ, N) are specified by means of an actuating element (11) and/or by means of an electronic control system (13).

## Revendications

1. Dispositif de commutation (14 ; 14b) pour une boîte de vitesses (15) à plusieurs rapports d'un véhicule automobile comprenant :
- un disque à courbe (18 ; 18b) monté à rotation et couplé à un moyen d'entraînement (22),
- un élément de rotation (33) ayant un segment denté et relié de manière mobile en rotation avec un élément de guidage (32) relié à l'élément de rotation (33) et placé dans un chemin de guidage (25 ; 25c ; 25d) du disque à courbe (18 ; 18b),
- un segment de pignon denté (40, 40c) en prise avec le segment denté de l'élément de rotation (33),
- un élément de commutation (41, 43 ; 41a, 43 ; 41b, 43 ; 41c, 43) relié au segment de pignon denté (40, 40c), et qui agit lors de la rotation de l'élément de rotation pour commuter les rapports, sur les fourchettes (46, 47, 48) de la boîte de vitesses (15) à plusieurs rapports,
- et un premier moyen de translation (53 ; 53a ; 71) couplé de manière forcée au moyen d'entraînement (22) pour coulisser axialement l'élément de commutation (41, 43 ; 41a, 43 ; 41b, 43 ; 41c, 43) perpendiculairement à son axe de rotation pour sélectionner la fourchette respective.

2. Dispositif de commutation selon la revendication 1,
**caractérisé par**
un second moyen de translation (38) pour déplacer axialement l'élément de rotation (33) et l'élément de guidage (32) par rapport au disque à courbe (18 ; 18b).

3. Dispositif de commutation selon la revendication 2,
**caractérisé en ce que**
le second moyen de translation est un électro-aimant de translation (38) ou un moteur à broche.

4. Dispositif de commutation selon l'une quelconque des revendications 1 à 3,
**caractérisé en ce que**
le premier moyen de translation (53 ; 53a ; 71) est couplé au disque à courbe (18 ; 18b).

5. Dispositif de commutation selon l'une quelconque des revendications 1 à 4,
**caractérisé en ce que**
le moyen d'entraînement du disque à courbe (18 ; 18b) est un moteur électrique (22).

6. Dispositif de commutation selon l'une quelconque des revendications 1 à 5,
**caractérisé en ce qu'**
au moins un premier segment (26, 27) du chemin de guidage (25, 25c) du disque à courbe (18 ; 18b) correspond à une position de commutation neutre (N) de la boîte de vitesses (15) à plusieurs rapports.

7. Dispositif de commutation selon l'une quelconque des revendications 1 à 6,
**caractérisé en ce que**
deux seconds segments (29, 30 ; 29c, 30c) du chemin de guidage (25, 25c) du disque à courbe (18 ; 18b) correspondent à deux positions de commutation (A, B ; Aₘᵢₙ, Aₘₐₓ, Bₘᵢₙ, Bₘₐₓ) des fourchettes de commutation (46-48).

8. Dispositif de commutation selon la revendication 7,
**caractérisé en ce que**
les deux seconds segments (29c, 30c) du chemin de guidage (25c) du disque à courbe (18 ; 18b) comportent des déformations (88, 93) qui libèrent des tensions mécaniques, des fourchettes de commutation (46, 47, 48) lorsqu'elles atteignent leur position de commutation (A, B ; Aₘᵢₙ, Aₘₐₓ, Bₘᵢₙ, Bₘₐₓ).

9. Dispositif de commutation selon l'une quelconque des revendications 1 à 8,
**caractérisé par**
au moins un élément élastique (82-85) entre le chemin de guidage (25, 25c) du disque à courbe (18 ; 18b) et les fourchettes de commutation (46-48) pour compenser les tolérances des positions de commutation (Aₘᵢₙ, Aₘₐₓ, Bₘᵢₙ, Bₘₐₓ).

10. Dispositif de commutation selon l'une quelconque des revendications 1 à 5,
**caractérisé en ce que**
le chemin de guidage (25d) se compose au moins partiellement d'un chemin circulaire (97) d'où partent deux segments de courbe (98, 99), le chemin circulaire (97) correspondant à une position de commutation neutre (N) des fourchettes de commutation (46, 47, 48) et les deux segments de courbe (98, 99) correspondent à deux positions de commutation des fourchettes (A, B).

11. Dispositif de commutation selon la revendication 10,
**caractérisé en ce qu'**
une partie (101) du chemin circulaire (97) est décalée axialement par rapport aux segments de courbe (98, 99).

12. Dispositif de commutation selon l'une quelconque des revendications 1 à 11,
**caractérisé en ce que**
des fourchettes de commutation (46-48) et des positions de commutation (A, B, N ; Aₘᵢₙ, Aₘₐₓ, Bₘᵢₙ, Bₘₐₓ, N) sont prédéterminées par un élément d'actionnement (11) et/ou à l'aide d'une régulation électronique (13).
